(19)

**Europäisches Patentamt**
**European Patent Office**
**Office européen des brevets**

(11) **EP 4 722 754 A1**

(12) **EUROPEAN PATENT APPLICATION**
published in accordance with Art. 153(4) EPC

(43) Date of publication:
**08.04.2026 Bulletin 2026/15**

(21) Application number: **23943980.5**

(22) Date of filing: **03.07.2023**

(51) International Patent Classification (IPC):
***G01S 7/481*** *(2006.01)*

(52) Cooperative Patent Classification (CPC):
**G01S 7/481**

(86) International application number:
**PCT/CN2023/105547**

(87) International publication number:
**WO 2025/007246 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventors:
• **LIN, Jiao**
 **Shenzhen, Guangdong 518129 (CN)**
• **LIU, Jun**
 **Shenzhen, Guangdong 518129 (CN)**
• **WANG, Xingwu**
 **Shenzhen, Guangdong 518129 (CN)**
• **LI, Gengyu**
 **Shenzhen, Guangdong 518129 (CN)**

(74) Representative: **Körber, Martin Hans
Mitscherlich PartmbB
Karlstraße 7
80333 München (DE)**

(54) **OPTICAL MODULE, LASER RADAR, AND TERMINAL**

(57) An optical module (20), a lidar, and a terminal are provided, and are used in the field of detection technologies. The optical module (20) includes an optical emitting module (201), a coaxial optical module (202), a scanning module (203), and an optical receiving module (204). During emission, a first light beam is propagated to object space successively through the optical emitting module (201), the coaxial optical module (202), and the scanning module (203). During receiving, a first returned light beam is propagated to the optical receiving module (204) successively through the scanning module (203) and the coaxial optical module (202), and a first included angle exists between the first light beam that has passed through the coaxial optical module (202) and the first returned light beam that has not reached the coaxial optical module (202) yet. A first offset exists between a position of the optical receiving module (204) and an ideal received light beam of the first light beam, to compensate for an angle offset of the first returned light beam, so that a light spot of the first returned light beam is closer to an effective receiving region of the optical receiving module (204), or even overlaps with a center of the effective receiving region. In this way, a signal loss caused by a walk off angle can be reduced, echo validity can be improved, and detection performance can be improved.

FIG. 2

EP 4 722 754 A1

**Description**

**TECHNICAL FIELD**

This application relates to the field of detection technologies, and in particular, to an optical module, a lidar, and a terminal.

**BACKGROUND**

With development of an information technology and computer vision, detection technologies develop rapidly, and various detection apparatuses bring great convenience to people's life and travel. The detection apparatuses may be considered as "eyes" for environment sensing of devices, and include vision-based sensors such as cameras, and radar-based sensors such as millimeter-wave radars, lidars, and ultrasonic radars.

Lidars (light detection and ranging, Lidars, or referred to as light detection and ranging apparatuses) have advantages of high resolution, good detection performance, and strong concealment, and play an important role in a process of sensing an environment by a device. Scanning lidars are lidars that are widely used and detect object space through scanning.

A scanning detection apparatus includes an emitting end, a receiving end, and a scanning module. Because the scanning module rotates or swings, a scanner generates an offset angle in a period of time in which a light beam is projected by the scanner to a target object, and then reflected back by the target object to the scanner. The offset angle between an emitted light beam and a returned light beam caused by movement of the scanner is referred to as a walk off angle in the detection field. Existence of the walk off angle prevents the returned light beam from irradiating at a center of the receiving end. As a result, strength of a return light signal decreases and ranging performance is affected.

**SUMMARY**

Embodiments of this application provide an optical module, a lidar, and a terminal, to reduce a signal loss caused by a walk off angle, improve validity of a received echo signal, and improve detection performance.

According to a first aspect, an embodiment of this application provides an optical module. The optical module includes an optical emitting module, a coaxial optical module, a scanning module, and an optical receiving module.

The optical emitting module is configured to propagate a first light beam emitted by a light source to the coaxial optical module.

The coaxial optical module is configured to propagate the first light beam to the scanning module.

The scanning module is configured to scan the first light beam into object space, and is further configured to transmit the first returned light beam to the coaxial optical module, where the first returned light beam is a returned light beam of the first light beam.

The coaxial optical module is further configured to transmit the first returned light beam to the optical receiving module, where a first included angle exists between the first light beam that has entered the coaxial optical module and the first returned light beam that has not returned to the coaxial optical module yet, and the first included angle is greater than 0° and less than 90°.

The optical receiving module is configured to receive the first returned light beam.

A first offset exists between a position of the optical receiving module and an ideal received light beam of the first light beam, and an ideal received light beam of the first returned light beam that has not returned to the coaxial optical module yet is parallel to the first light beam.

In this embodiment of this application, the ideal received light beam is a returned light beam parallel to the first light beam. In other words, if a scanner is in a static state, a returned light beam of the first light beam is propagated along an optical path of the ideal received light beam. Because the scanner constantly performs scanning, after being propagated to a target object in the object space, the first light beam may be reflected by the target object in the object space, to obtain a first reflected light beam. Because a specific distance exists between the target object in the object space and the scanner, when the first returned light beam passes through the scanner, the scanner already rotates by a specific angle. Therefore, the first returned light beam is no longer propagated along the ideal received light beam. In other words, an offset angle exists between the first returned light beam and the ideal received light beam.

Based on this, in this application, the receiving module is deviated from the optical path of the ideal received light beam, to compensate for the offset of the first returned light beam relative to the ideal received light beam, and reduce a signal loss caused by a walk off angle. It may be understood that the offset angle between the first returned light beam and the ideal received light beam (parallel to the first light beam) is the first included angle, and the optical receiving module also has an offset relative to the ideal received light beam. Therefore, the offset of the optical receiving module compensates for the offset of the first light beam, so that a light spot of the first returned light beam can be closer to an effective receiving region of the optical receiving module, or even overlap with a center of the effective receiving region. In this way, the optical receiving module can receive the first returned light beam more accurately. This improves validity of a received echo signal and detection performance.

The effective receiving region is a region in which the receiving module may be configured to receive the first returned light beam, and includes but is not limited to a clear aperture surface of a microlens array, a receiving mode field of an optical fiber, a detector of a receiver, or the like.

**In still another possible implementation of the first aspect,** the first offset is related to the first included angle.

The first included angle is the included angle between the returned light beam and the emitted light beam. The offset amount of the first returned light beam propagated to the optical receiving module may be determined based on the included angle and a distance of an optical path between a scanner and the optical receiving module, so that a compensation amount of the optical receiving module can be designed. In this way, the optical receiving module can receive the first returned light beam more accurately, to improve validity of a received echo signal and detection performance.

**In still another possible implementation of the first aspect,** the coaxial optical module includes an optical splitting module and a beam expansion module, and the optical splitting module is disposed between the optical emitting module and the beam expansion module.

For example, the term "between" herein represents the middle of an optical path. In other words, the first light beam is propagated to the scanning module through the optical splitting module and the beam expansion module, and the first returned light beam is propagated to the receiving module through the beam expansion module and the optical splitting module.

The optical splitting module is an optical apparatus that splits a light beam into a plurality of light beams. For example, the optical splitting module may include one or a combination of a polarization beam splitter (polarization beam splitter, PBS) and a semi-transmissive semi-reflective beam splitter. In some scenarios, the optical splitting module may further include another module configured to assist in implementing optical splitting or improve optical splitting efficiency and light beam quality. For example, the optical splitting module may further include one or more of a wave plate (for example, a quarter-wave plate, a half-wave plate, or an eighth-wave plate), an anti-reflective coating, a filter, or the like. For example, the optical splitting module may include a PBS and a quarter-wave plate (quarter-wave plate, QWP). The first light beam passes through the PBS and the quarter-wave plate successively, and the first returned light beam passes through the quarter-wave plate and the PBS successively. Because the quarter-wave plate may change a polarization state, and the PBS may transmit or reflect a passing light beam based on a polarization state, an optical path of the first light beam and an optical path of the first returned light beam may be separated, to implement coaxial emission and reception.

The beam expansion module is a module configured to increase or reduce a light beam diameter. For example, the beam expansion module may be a telescope beam expansion module in which at least two groups of lenses are disposed to implement beam expansion/beam contraction.

In this implementation, the beam expansion module is disposed at a back end. During emission, a light beam is split and then expanded. In this way, a diameter of the first light beam is small when the first light beam passes through the optical splitting module, and a diameter of the light beam is increased after beam expansion, so that a light spot propagated into the object space is large. This improves detection efficiency. During receiving, a diameter of the returned light beam is reduced after the returned light beam passes through a beam expansion unit, so that the light beam is more likely to be received by an optical receiving unit, and validity of a received signal is improved. In addition, because a path of a thin light beam is more controllable than that of a thick light beam, a technical problem that an optical axis of an emitting end and an optical axis of a receiving end are not parallel can be easily resolved.

In addition, in this case, the emitted light beam and the received light beam may share a same set of beam expansion lenses. This improves component integration and reduces a size of a module.

**In still another possible implementation of the first aspect,** the optical receiving module includes a first microlens array, and the first microlens array is configured to receive the first returned light beam has passed through the optical splitting module.

A third included angle exists between an optical axis of the first microlens array and the ideal received light beam, and the third included angle is less than or equal to a second included angle and is greater than or equal to a half of the second included angle.

The second included angle is related to a maximum offset angle and a beam expansion multiple of the beam expansion module, and the maximum offset angle is related to a maximum detection range of the optical module and a scanning speed of the scanning module.

Optionally, the beam expansion multiple of the beam expansion module may alternatively be replaced by a focal length of a lens in the beam expansion module. Optionally, the first microlens array may be configured to converge the first returned light beam, so that the receiver can receive the first returned light beam more accurately.

In the foregoing embodiment, during placement of the first microlens array, an angular offset exists between the optical axis of the first microlens array and the optical path of the ideal received light beam, so that an angle offset of the first returned light beam can be compensated. This improves validity of a received echo signal and detection performance.

The third included angle $\theta$ may fall within the following range, $\frac{\lambda_{max}}{2} < \theta < \lambda_{max}$ , and $\lambda_{max}$ is the second included angle. The second included angle is related to the maximum offset angle (represented as $\varphi$) and a magnification multiple of the beam expansion module. The magnification multiple of the beam expansion module may alternatively be replaced by focal lengths of the two groups of lenses in the beam expansion module.

In some scenarios, there are a plurality of possible cases of a distance between the target object in the object space and the optical module. Therefore, the offset angle (namely, the first included angle) between the first returned light beam and the ideal received light beam changes with the distance between the target object and the optical module. The maximum offset angle is a maximum value of the first included angle. In other words, the maximum offset angle is an included angle between the ideal received light beam and the first returned light beam (briefly referred to as a maximum offset light beam) formed by reflecting the first light beam by the target object at the maximum detection range. In other words, the maximum offset angle is an included angle between the maximum offset light beam and a static received light beam, and the maximum offset light beam is a light beam formed by reflecting the first light beam by the target object at the maximum detection range of the optical module. The maximum detection range may be a maximum detection range of the optical module, namely, a maximum detection range of a detection apparatus in which the optical module is located, and may be predefined or pre-designed.

For example, the second included angle may meet the following formula: $\frac{\tan \lambda_{max}}{\tan \varphi} = \text{magnification multiple}$ . Further, the magnification multiple=D2/D1, where D2 is a diameter of the first light beam that has passed through the beam expansion module, and D1 is a diameter of the first light beam that has not reached the beam expansion module yet.

Optionally, the maximum offset angle is related to the maximum detection range and the scanning speed of the scanning module. For example, the maximum offset angle $\varphi$ may meet the following formula: $\varphi = k * D * \frac{v}{c}$ . $v$ is an angular velocity of the scanner, c is the speed of light, and D is the maximum detection range. k is a coefficient. Because there is a correlation between a mechanical angle and an optical angle, k is used for conversion into the mechanical angle and the optical angle. For example, if the optical angle is twice the mechanical angle, and the light beam passes through the scanner twice, k may be 4. In other words, $\varphi = 4 * D * \frac{v}{c}$ .

**In still another possible implementation of the first aspect**, the beam expansion module includes two groups of lenses, the two groups of lenses have different focal lengths, and a focal length of a lens close to the object space is greater than a focal length of a lens far away from the object space.

**In still another possible implementation of the first aspect,** the beam expansion module includes a second microlens array and a collimation lens (collimation lens, CL), and the second microlens array and the collimation lens have a common first focal plane. Optionally, the second microlens array is disposed between the optical splitting module and the collimation lens.

Further, a focal length of the second microlens array is less than a focal length of the collimation lens. Optionally, the magnification multiple of the beam expansion module is related to the focal length of the second microlens array and the focal length of the collimation lens.

For example, $\frac{D2}{D1} = \frac{fc}{f2}$ , where D2 is a diameter of a light beam that has passed through the beam expansion module, D1 is a diameter of a light beam that has not reached the beam expansion module yet, fc is the focal length of the collimation lens, and f2 is the focal length of the second microlens array.

In some scenarios, the second included angle is related to the maximum offset angle $\varphi$, the focal length of the second microlens array, and the focal length of the collimation lens. For example, the second included angle may meet the following formula: tan $\varphi$ * fc = tan $\lambda_{max}$ * f2.

In this way, beam expansion is performed through the front and rear groups of lenses (or referred to as the telescope beam expansion module), so that a process tolerance of implementing coaxial emission and reception by the optical module is increased, and implementability is better.

**In still another possible implementation of the first aspect,** a first offset distance between the first microlens array and the ideal received light beam is related to the third included angle, a distance between the first microlens array and the optical splitting module, a distance between the optical splitting module and the beam expansion module, and a second offset of a light spot of the first returned light beam on the first focal plane.

Optionally, the second offset is a distance between the light spot of the first returned light beam and a light spot of the ideal received light beam of the first returned light beam on the first focal plane when the first included angle is the maximum offset angle.

For example, the second offset is related to the third included angle and focal lengths of the two groups of lenses in the beam expansion module. For example, the second offset $\Delta y$ meets the following formula:

$$\Delta y = fc * \left( tan\left(\frac{f2}{fc} * \theta\right) \right)$$

$fc$ is the focal length of the collimation lens, $f2$ is the focal length of the second microlens array, and $\theta$ is the third included angle.

For example, the first offset distance $\Delta x$ meets the following formula:

$$\Delta x = |(d1 + d2) * tan\,\theta - \Delta y|$$

d1 is the distance between the first microlens array and the optical splitting module, d1 is the distance between the optical splitting module and the beam expansion module (or the second microlens array), $\theta$ is the third included angle, and $\Delta y$ is the second offset.

**In still another possible implementation of the first aspect,** the optical receiving module further includes an optical receiving element, and the optical receiving element is configured to receive the first returned light beam that passes through the first microlens array.

Optionally, a distance between the optical receiving element and the ideal received light beam is a second offset distance, and the second offset distance is related to the third included angle, the distance between the first microlens array and the optical splitting module, the distance between the optical splitting module and the beam expansion module, a focal length of the second microlens array, a focal length of the collimation lens, and a third offset of the light spot of the first returned light beam on the first focal plane.

The third offset is a distance between the light spot of the first returned light beam on the first focal plane and a light spot of a maximum offset light beam on the focal plane, and the maximum offset light beam is the first returned light beam when the first included angle is the maximum offset angle.

For example, the third offset is related to the maximum offset angle $\varphi$, the focal length of the second microlens array $f2$, the focal length of the collimation lens $fc$, and the third included angle $\theta$. For example, the third offset ($\Delta y'$) meets the following formula:

$$\Delta y' = fc * tan(\varphi - f2/fc * \theta)$$

For example, the second offset distance ($\Delta x'$) meets the following formula:

$$\Delta x' = |(d1 + d2) * tan(fc/f2 * \varphi - \theta) - \Delta y')|$$

**In still another possible implementation of the first aspect,** a clear aperture of the first microlens array is related to at least one of the first offset distance and the second offset distance, and a diameter of the first light beam that has not reached the beam expansion unit yet.

For example, the clear aperture w3 of the first microlens array meets the following formula:

$$w3 \geq 2 * max(\Delta x, \Delta x') + D1$$

$max()$ represents selecting a maximum value, D1 is a light beam diameter of the first light beam that has not reached the beam expansion module yet or a light beam diameter of the first returned light beam that has passed through the beam expansion module. For other parameters, refer to the foregoing descriptions.

**In still another possible implementation of the first aspect,** a period $p$ of the first microlens array is related to a transition zone of the first microlens, the first offset distance, the second offset distance, and the light beam diameter of the first light beam that has not reached the beam expansion module yet. The light beam diameter of the first light beam that has not reached the beam expansion module yet may be replaced by the light beam diameter of the first returned light beam that has passed through the beam expansion module.

For example, the period $p$ of the first microlens array meets the following formula:

$$p = w3 + \delta$$

$$w3 \geq 2 * max(\Delta x, \Delta x') + D1$$

$\delta$ is the transition zone of the first microlens array. For parameters, refer to the foregoing descriptions.

**In still another possible implementation of the first aspect,** the optical emitting module includes a waveguide or an optical fiber.

**In still another possible implementation of the first aspect,** the optical receiving module includes a waveguide or an optical fiber.

**In still another possible implementation of the first aspect,** the optical emitting module, the optical receiving module, and the optical splitting module are packaged on a glass base to form a first optical assembly, and an optical window of the first optical assembly is aligned with a clear aperture surface of the beam expansion unit.

**In still another possible implementation of the first aspect,** the optical emitting module, the optical receiving module, the optical splitting module, and the second microlens array are packaged on a glass base to form a second optical assembly, and an optical window of the second optical assembly is aligned with a clear aperture surface of the collimation lens.

**In still another possible implementation of the first aspect,** the coaxial optical module includes a polarization beam splitter (PBS) and a quarter-wave plate.

**According to a second aspect,** an embodiment of this application provides a lidar, where the lidar includes the optical module according to any implementation of the first aspect.

**In a possible implementation of the second aspect,** the lidar further includes a light source. For example, the light source is a laser.

**In still another possible implementation of the second aspect,** the lidar further includes a detector, and the detector is configured to obtain an electrical signal based on a light beam.

**According to a third aspect,** an embodiment of this application provides a terminal. The terminal includes the optical module according to any one of the first aspect, or the terminal includes the lidar according to any implementation of the second aspect.

Optionally, the terminal may be an intelligent terminal or a transportation means such as a vehicle, an uncrewed aerial vehicle, or a robot. Certainly, the terminal may alternatively be replaced by an industrial device, an entertainment device, or the like. The intelligent terminal is, for example, a mobile phone, a tablet computer, a notebook computer, a smart band, a smart watch, or smart glasses. The transportation means is, for example, a vehicle, a ship, aircraft, or a logistics robot. The industrial device is, for example, an industrial robot and a robotic arm. The entertainment device is, for example, a virtual reality (virtual reality, VR) device, a mixed reality (mixed reality, MR) device, a massage chair, or a 4D cinema cockpit. A device in which an electrical connector may be used is not strictly limited in this application.

## BRIEF DESCRIPTION OF DRAWINGS

The following briefly describes accompanying drawings used in descriptions of embodiments.

FIG. 1 is a diagram of a detection process;
FIG. 2 is a diagram of a structure of an optical module according to an embodiment of this application;
FIG. 3 is a diagram of a structure of another optical module according to an embodiment of this application;
FIG. 4 is a diagram of a structure of another optical module according to an embodiment of this application;
FIG. 5 is a diagram of a structure of another emitting module according to an embodiment of this application;
FIG. 6A is a diagram of a structure of another optical module according to an embodiment of this application;
FIG. 6B is a diagram of an optical path of an optical module according to an embodiment of this application;
FIG. 6C is a diagram of a parameter of an optical module according to an embodiment of this application;
FIG. 7 is a diagram of a possible simulation result according to an embodiment of this application;
FIG. 8 is a diagram of a possible simulation result according to an embodiment of this application;
FIG. 9 is a diagram of a structure and an optical path of another optical module according to an embodiment of this application;
FIG. 10 is a diagram of a structure of another optical module according to an embodiment of this application; and
FIG. 11 is a diagram of a structure of another optical module according to an embodiment of this application.

## DESCRIPTION OF EMBODIMENTS

The following describes embodiments of this application with reference to the accompanying drawings.

A scanning detection apparatus is an apparatus that scans object space through a scanning mechanism to complete detection of a whole field of view. The scanning detection apparatus usually projects an emitted signal into the object space at a plurality of angles through movement (such as swing or rotation) of the scanning mechanism, and therefore the scanning mechanism is continuously in a moving state. When a lidar operates, as a result of high-speed rotation (or swing) of the scanning mechanism, the scanning mechanism already generates an offset angle during a time when a light beam is emitted by the scanning mechanism to a target object and then reflected back.

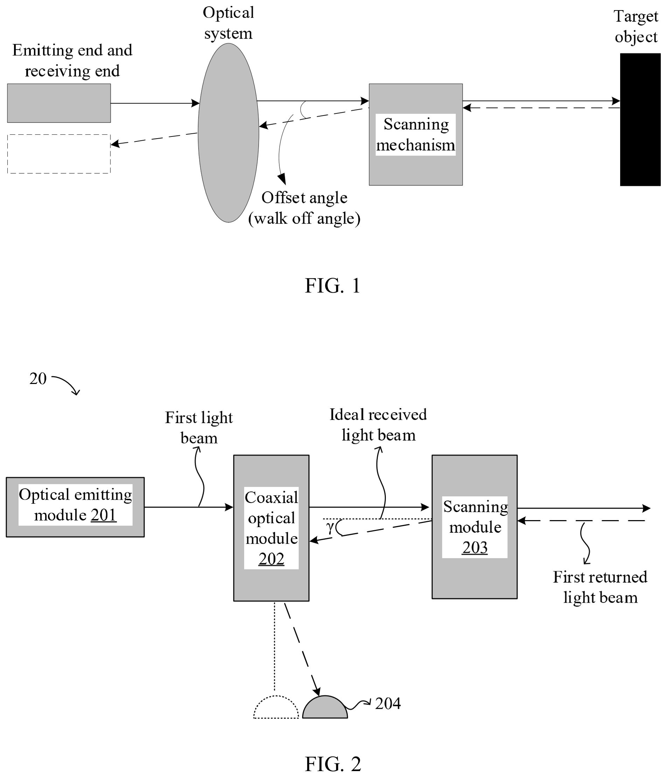

FIG. 1 is a diagram of a detection process. As a scanning mechanism constantly moves, an emitted light beam (represented by a solid arrow) and a returned light beam (represented by a dashed arrow) generate an offset angle, namely, a walk off angle. An angle of the walk off angle is positively correlated with an angular velocity of the scanning mechanism and a time of flight of the light beam in object space. A longer time of flight of the light beam and a faster angular velocity of the scanning mechanism indicate a larger walk off angle. The offset angle causes the light beam to deviate at a receiving position. As a result, the returned light beam cannot be irradiated at a center of a receiving end, signal strength of the received returned light beam is reduced, and a signal-to-noise ratio is reduced, affecting a ranging distance.

Especially for a detection apparatus that includes an element such as an optical fiber or a waveguide, because a mode field area received by the optical element such as the optical fiber or the waveguide is small, the walk off angle of the returned light beam causes the returned light beam to deviate from a receiving mode field. As a result, a signal of the returned light beam is significantly reduced, and detection performance is affected. For example, for a detection apparatus that uses a single mode fiber (single mode fiber, SMF) as an emitting end and receiving end, an offset distance of a returned light beam at the receiving end $\Delta x = f * \tan\gamma$, where f is a focal length of a receiving lens, and $\gamma$ is a walk off angle. For a scanning mechanism of 3000 rotations per minute (r/min) with a detection range of 150 m, $\gamma$ is approximately 0.036°. For a vehicle-mounted lidar, a value of f ranges from dozens of millimeters to hundreds of millimeters (mm) due to a requirement on an emit angle or a receive aperture. Therefore, it is obtained that a value of $\Delta x$ ranges from several micrometers to dozens of micrometers, and a spot size of the SMF is usually approximately 10 $\mu$m. As a result, an offset of the returned light beam at the receiving end is very likely to exceed the spot size of the SMF, and consequently signal strength of the returned light beam is significantly reduced, greatly affecting detection performance.

In view of this, embodiments of this application provide an optical module, a lidar, and a terminal, to reduce a signal loss caused by a walk off angle, improve validity of a received echo signal, and improve detection performance.

FIG. 2 is a diagram of a structure of an optical module according to an embodiment of this application. The optical module 20 includes an optical emitting module 201, a coaxial optical module 202, a scanning module 203, and an optical receiving module 204.

The optical emitting module 201 is configured to propagate a first light beam (a solid line with an arrow shown in FIG. 2) emitted by a light source to the coaxial optical module 202. The optical emitting module 201 may include a lens, an optical fiber, a waveguide, and the like. The light source may be a laser such as a laser diode (laser diode, LD), a vertical cavity surface emitting laser (Vertical Cavity Surface Emitting Laser, VCSEL), a distributed feedback laser diode (distributed feedback LD, DFB-LD), a distributed bragg reflection laser diode (distributed bragg reflection LD, DBR-LD), a grating coupled sampling reflection laser diode (Grating coupled sampling reflection LD, GCSR-LD), a micro-opto-electro-mechanical system laser diode (micro opto electro mechanical system LD, MOEMS-LD), or another light-emitting component. The first light beam may be, for example, a frequency-modulated continuous wave (Frequency Modulated Continuous Wave, FMCW) light beam, and a waveform of the first light beam may be a sawtooth wave, a triangular wave, or a sine wave.

The coaxial optical module 202 is configured to propagate the first light beam to the scanning module 203. The coaxial optical module 202 is configured to implement coaxial emission and reception. In some scenarios, coaxial emission and reception may be understood as that an emitted light beam and a received light beam jointly pass through a part of optical elements. For example, the emitted light beam and the received light beam jointly pass through the scanning module 203 and the coaxial optical module 202. In some other scenarios, coaxial emission and reception may be understood as that a principal optical axis of the emitted light beam and a principal optical axis of the returned light beam are parallel. Certainly, "parallel" herein means being parallel ideally (for example, a case in which movement of a scanner is not considered). For example, the coaxial optical module 202 may include a lens, a beam splitter, a wave plate, and the like.

The scanning module 203 is configured to scan the first light beam into object space. In other words, the scanning module 203 may swing or rotate, to project a light beam into the object space at different angles. The scanning module 203 is further configured to transmit a first returned light beam (a dashed line with an arrow shown in FIG. 2) to the coaxial optical module, where the first returned light beam is a returned light beam of the first light beam. For example, the first light beam is propagated to a target object in the object space, and is reflected by the target object to form a reflected signal, and the first returned light beam includes the reflected signal of the first light beam.

A first included angle $\gamma$ exists between the first light beam that has entered the coaxial optical module 202 and the first returned light beam that has not returned to the coaxial optical module 202 yet. The first included angle is a walk off angle. Optionally, the first included angle is greater than 0° and less than 90°. In other words, $0° < \gamma < 90°$.

The coaxial optical module 202 is further configured to transmit the first returned light beam to the optical receiving module 204. **For example,** the coaxial optical module 202 includes a polarization beam splitter (PBS) and a quarter-wave plate. The first light beam is transmitted through the PBS and arrives at the quarter-wave plate, and a polarization state of the first returned light beam changes after the first returned light beam passes through the quarter-wave plate, so that the first returned light beam is reflected by the PBS and propagated to the optical receiving module 204.

In this embodiment of this application, a first offset exists between a position of the optical receiving module 204 and an ideal received light beam (a dashed line without an arrow shown in FIG. 2) of the first light beam. An ideal received light beam of the first returned light beam that has not returned to the coaxial optical module 202 yet is parallel to the first light beam. In other words, the ideal received light beam is a light beam whose principal optical axis is parallel to the first light beam. When the walk off angle is 0°, for example, when the scanner is static (or does not rotate), a returned light beam corresponding to the first light beam is propagated along an optical path of the ideal received light beam.

In other words, if the walk off angle is 0°, the returned light beam of the first light beam is propagated along the optical path of the ideal received light beam. Because the scanner constantly moves, and a specific distance exists between the target in the object space and the scanner, after the first light beam is propagated to the target object in the object space and reflected by the target object in the object space to obtain a first reflected light beam, when the first returned light beam passes through the scanner, the scanner already rotates by a specific angle. Therefore, the first returned light beam is no longer propagated along the ideal received light beam. In other words, an offset angle exists between the first returned light beam and the ideal received light beam. Based on this, in this application, the receiving module is deviated from the optical path of the ideal received light beam, to compensate for the offset of the first returned light beam relative to the ideal received light beam, and reduce a signal loss caused by the walk off angle. As shown in FIG. 1, a receiving point (namely, a translation position point of the optical receiving module 204) of the ideal received light beam is described by using a black solid semicircle, and an offset distance exists between the optical receiving module 204 and the receiving point of the ideal received light beam.

It may be understood that the offset angle between the first returned light beam and the ideal received light beam (parallel to the first light beam) is the first included angle, and the optical receiving module also has an offset relative to the ideal received light beam. Therefore, the offset of the optical receiving module compensates for the offset of the first light beam, so that a light spot of the first returned light beam can be closer to a center of the optical receiving module, or overlap with the center of the optical receiving module. In this way, the optical receiving module can receive the first returned light beam more accurately. This improves validity of a received echo signal and detection performance.

**In still another possible implementation of the first aspect,** the first offset is related to the first included angle. The first included angle is the walk off angle between the returned light beam and the emitted light beam. The offset amount of the returned light beam propagated to the optical receiving module may be determined based on the included angle and a distance of an optical path between the scanner and the optical receiving module, so that a compensation amount of the optical receiving module can be designed. In this way, the optical receiving module can receive the first returned light beam more accurately, to improve validity of a received echo signal and detection performance.

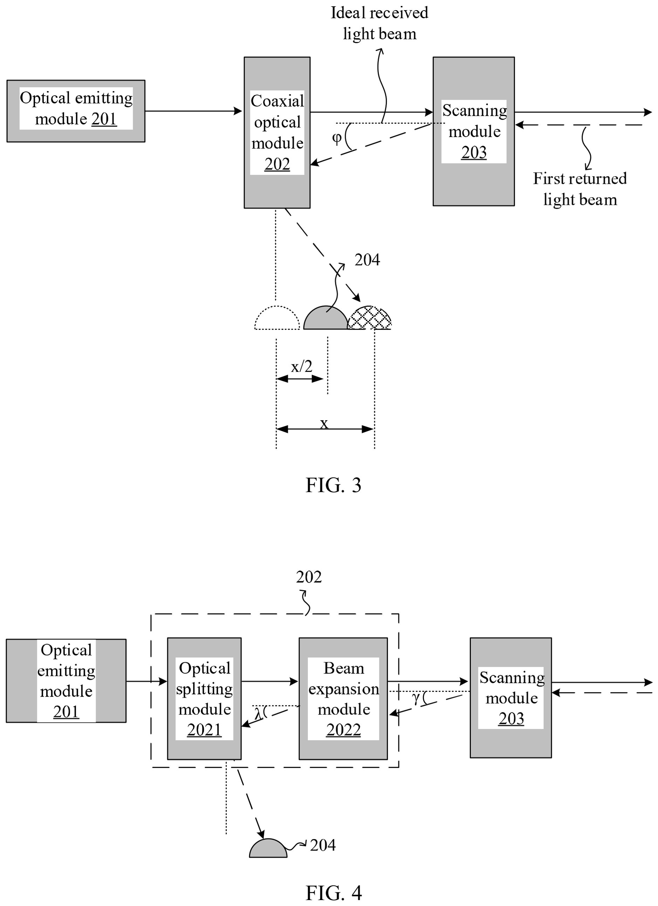

For example, a maximum value of the first included angle may be an included angle between a light beam returned from a maximum detection range and the emitted light beam (for example, the first light beam), and is referred to as a maximum offset angle and represented as $\varphi$ for ease of description. FIG. 3 is a diagram of a structure of another optical module according to an embodiment of this application. When an offset amount between a light beam returned at the maximum offset angle $\varphi$ and an ideal received light beam at the receiving point (namely, the translation position point of the optical receiving module) is x, an offset amount between the optical receiving module 204 and the receiving point of the ideal received light beam may range from x/2 to x. As shown in FIG. 3, the offset amount between the optical receiving module 204 and the receiving point of the ideal received light beam may be x/2. In this case, if an offset angle between the first returned light beam and the ideal received light beam is large, the first returned light beam is closer to an optical axis center of the optical receiving module. This improves ranging precision during long-range detection.

Alternatively, the offset amount between the optical receiving module 204 and the receiving point of the ideal received light beam may range from 0 to x/2. In this way, ranging precision during near-range detection can be ensured.

Further, the maximum offset angle is related to the maximum detection range and an angular velocity of the scanning module 203. For example, the maximum offset angle $\varphi$ may meet the following formula: $\varphi = k*D*v/c$. v is the angular velocity of the scanner, c is the speed of light, and D is the maximum detection range. k is a coefficient. Because there is a correlation between a mechanical angle and an optical angle, k is used for conversion into the mechanical angle and the optical angle. For example, if the optical angle is twice the mechanical angle, and the light beam passes through the scanner twice, k may be 4. In other words, $\varphi = 4*D*v/c$. The maximum detection range may be predefined (or specified) or preset by a vendor, a standard organization, a user, a used device, or the like.

**In a possible implementation,** the coaxial optical module includes an optical splitting module and a beam expansion module, and the optical splitting module is disposed between the optical emitting module and the beam expansion module.

The beam expansion module is a module configured to increase or reduce a light beam diameter. The optical splitting module is an optical apparatus that splits a light beam into a plurality of light beams. For example, the optical splitting module may include one or a combination of a polarization beam splitter (polarization beam splitter, PBS) and a semi-transmissive semi-reflective beam splitter. In some scenarios, the optical splitting module may further include another module configured to assist in implementing optical splitting or improve optical splitting efficiency and light beam quality. For example, the optical splitting module may further include one or more of a wave plate, an anti-reflective coating, a filter, or the like. For example, the optical splitting module may include a PBS and a quarter-wave plate. The first light beam passes through the PBS and the quarter-wave plate successively, and the first returned light beam passes through the quarter-wave plate and the PBS successively. Because the quarter-wave plate may change a polarization state, and the PBS may transmit or reflect a passing light beam based on the polarization state, an optical path of the first light beam and an optical path of the first returned light beam may be separated, to implement coaxial emission and reception.

FIG. 4 is a diagram of a structure of another optical module according to an embodiment of this application. The coaxial optical module 202 includes an optical splitting module 2021 and a beam expansion module 2022, and the optical splitting module 2021 is disposed between the optical emitting module 201 and the beam expansion module 2022. It can be learned that the term "between" herein represents the middle of an optical path. In other words, the first light beam is propagated to the scanning module 203 through the optical splitting module 2021 and the beam expansion module 2022, and the first returned light beam is propagated to the optical receiving module 204 through the beam expansion module 2022 and the optical splitting module 2021.

In this implementation, the beam expansion module 2022 is disposed at a back end. During emission, a light beam is split and then expanded. In this way, a diameter of the first light beam is small when the first light beam passes through the optical splitting module, and a diameter of the light beam is increased after beam expansion, so that a light spot propagated into the object space is large. This improves detection efficiency. During receiving, a diameter of the returned light beam is reduced after the returned light beam passes through a beam expansion unit, so that the light beam is more likely to be received by an optical receiving unit, and validity of a received signal is improved. In addition, because a path of a thin light beam is more controllable than that of a thick light beam, a technical problem that an optical axis of an emitting end and an optical axis of a receiving end are not parallel can be easily resolved. In addition, in this case, the emitted light beam and the received light beam may share a same beam expansion system. This improves component integration and reduces a size of a module.

Because the beam expansion module performs beam expansion (or beam contraction) on the light beam, an included angle between the first returned light beam that passes through the beam expansion module and the ideal received light beam may change. Refer to FIG. 4. The included angle between the first returned light beam that has passed through the beam expansion module 2022 and the ideal received light beam may be represented as $\lambda$. Optionally, the included angle $\lambda$ is greater than 0° and less than 90°. In other words, $0° < \lambda < 90°$.

Optionally, $\lambda$ is related to the first included angle and a magnification multiple of the beam expansion module 2022. For example, $\lambda$ meets the following formula: $\dfrac{\tan\lambda}{\tan\gamma} = \text{magnification multiple}$. In some scenarios, the magnification multiple is related to a diameter of a light beam before beam expansion and a diameter of the light beam after beam expansion. For example, the $\text{magnification multiple} = \dfrac{D2}{D1}$, D2 is a diameter of an emitted light beam (for example, the first light beam) that has passed through the beam expansion module 2022, and D1 is a diameter of the emitted light beam that has not reached the beam expansion module 2022 yet.

In some scenarios, the beam expansion module may include two groups of lenses. The two groups of lenses are placed one behind the other along the optical path of the first light beam, and are connected through a focal plane. The focal plane herein may be a real focal plane or a virtual focus plane. In this case, the magnification multiple of the beam expansion module is related to focal lengths of the two lenses (Descriptions are provided below). In this case, that $\lambda$ is related to the first included angle and the magnification multiple of the beam expansion module 2022 may alternatively be replaced by that $\lambda$ is related to the first included angle and the focal lengths of the two lenses.

**In a possible implementation,** the optical receiving module 204 includes a lens, and the lens is configured to receive the first returned light beam that has passed through the optical splitting module.

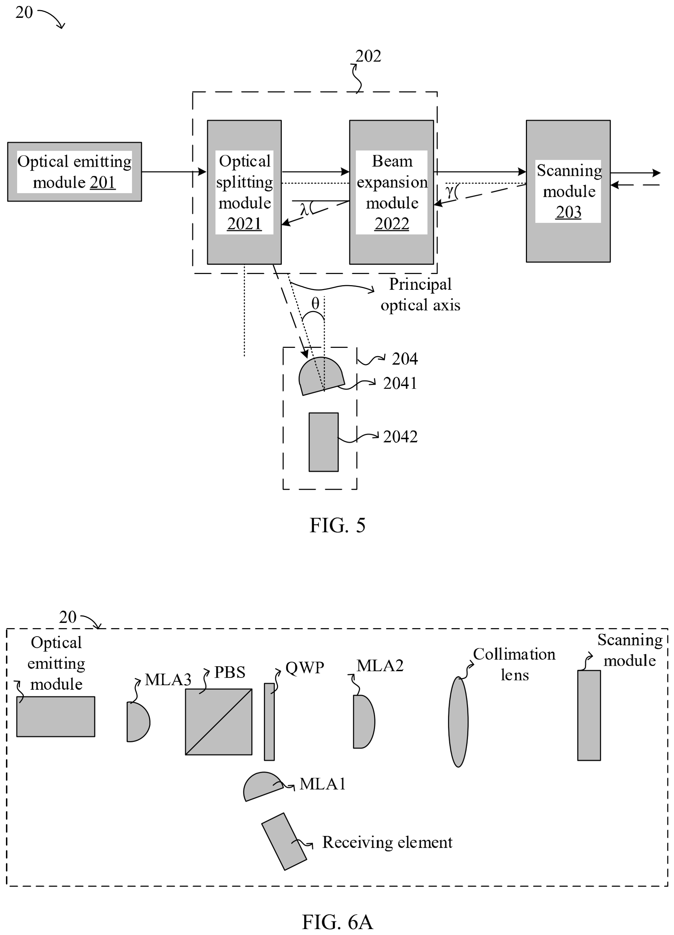

For example, the lens may be a microlens array (microlens array, MLA), and is referred to as a first microlens array and represented as MLA1 for ease of differentiation. FIG. 5 is a diagram of another emitting module according to an embodiment of this application. The optical receiving module 204 includes a first microlens array 2041 and an optical receiving element 2042. A third included angle $\theta$ exists between an optical axis (namely, the optical axis shown in FIG. 5) of the first microlens array 2041 and the ideal received light beam, and the third included angle $\theta$ is less than or equal to a second included angle and is greater than or equal to one half of the second included angle.

The second included angle is an included angle between a static received light beam and the returned light beam that returns at the maximum offset angle and has passed through the beam expansion module. In other words, the first light beam is reflected from the maximum detection range to obtain the returned light beam, and an included angle between the static received light beam and the returned light beam that passes through the scanning module and the beam expansion module is the second included angle. In other words, the second included angle is a maximum value of $\lambda$, and is represented as $\lambda_{max}$ for ease of description.

Correspondingly, the third included angle $\theta$ may fall within the following range, $\frac{\lambda_{max}}{2} < \theta < \lambda_{max}$, and $\lambda_{max}$ is the second included angle, where the second included angle is related to the maximum offset angle (represented as $\varphi$), a focal length of a collimation lens, and a focal length of a second microlens array.

In some scenarios, there are a plurality of possible cases of a distance between the target object in the object space and the optical module. Therefore, the offset angle (namely, the first included angle) between the first returned light beam and the ideal received light beam changes with the distance between the target object and the optical module. The maximum offset angle is a maximum value of the first included angle. In other words, the maximum offset angle is an included angle between the ideal received light beam and the first returned light beam (briefly referred to as a maximum offset light beam) formed by reflecting the first light beam by the target object at the maximum detection range. In other words, the maximum offset angle is an included angle between the maximum offset light beam and a static received light beam, and the maximum offset light beam is a light beam formed by reflecting the first light beam by the target object at the maximum detection range of the optical module. The maximum detection range may be a maximum detection range of the optical module, namely, a maximum detection range of a detection apparatus in which the optical module is located, and may be predefined or pre-designed.

For example, the second included angle may meet the following formula: $\frac{\tan \lambda_{max}}{\tan \varphi} = \text{magnification multiple}$. Further, the magnification multiple=D2/D1, where D2 is a diameter of the first light beam that has passed through the beam expansion module, and D1 is a diameter of the first light beam that has not reached the beam expansion module yet.

**As mentioned above, the beam expansion module may include two groups of lenses. In a possible implementation,** the beam expansion module includes a lens and a collimation lens. For example, the lens may be a microlens array, and is referred to as the second microlens array for ease of differentiation.

FIG. 6A is a diagram of a structure of another optical module according to an embodiment of this application. The optical module 20 includes an optical emitting module, a polarization beam splitter PBS, a quarter-wave plate QWP, a second microlens array MLA2, a collimation lens, a scanning module, and a first microlens array MLA1. The PBS and the QWP are an example of an optical splitting module, and the MLA22 and the collimation lens are an example of a beam expansion module. The MLA1 is included in an optical receiving module. The MLA2 is disposed between the optical splitting module and the collimation lens. With reference to FIG. 6A, the MLA2 may be specifically disposed between the QWP and the collimation lens. Optionally, a lens, for example, a microlens array, such as an MLA3 shown in FIG. 6A is further disposed between the emitting module and the optical splitting module.

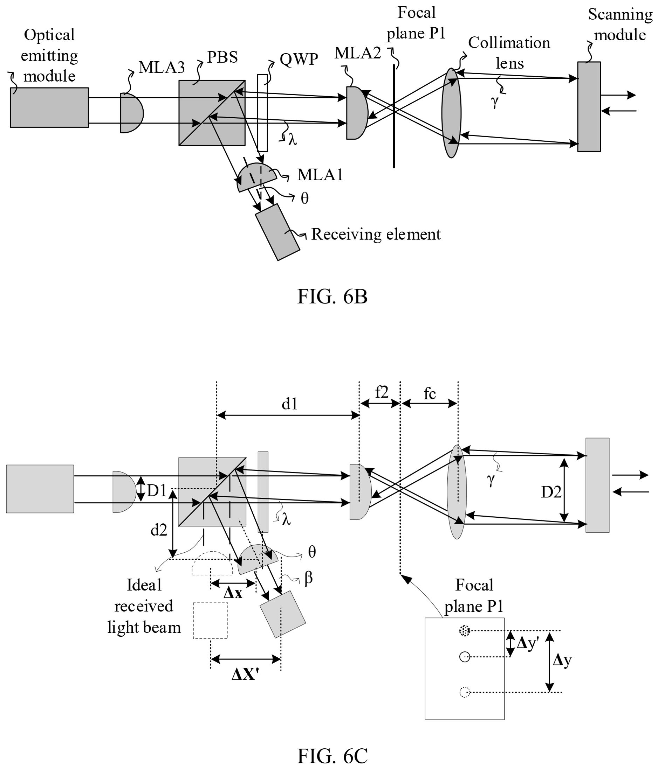

FIG. 6B is a diagram of an optical path of an optical module according to an embodiment of this application. For example, the lens is the second microlens array MLA2, and the MLA2 and the collimation lens have a common focal plane P1 (optionally a virtual focal plane or a real focal plane). Further, a focal length of the MLA2 is less than a focal length of the collimation lens. Optionally, a magnification multiple of the beam expansion module is related to the focal length of the second microlens array and the focal length of the collimation lens.

FIG. 6C is a diagram of a parameter of an optical module according to an embodiment of this application. For the structure and the optical path of the optical module, refer to FIG. 6A and FIG. 6B respectively. The focal length of the MLA2 is represented as f2, the focal length of the collimation lens is fc, a diameter of a first light beam that has not reached the MLA2 yet (and/or that passes through the MLA3) is D1, and a width of an emergent light beam of the collimation lens is D2. A distance from a center of the PBS to the MLA1 is represented as d1, a distance from the center of the PBS to the MLA2 is represented as d2, and an offset distance of an emitted signal and a received signal on the P1 plane is represented as $\Delta y$.

As shown in FIG. 6C, D2 is the diameter of the light beam that has passed through the beam expansion module, D1 is the diameter of the light beam that has not reached the beam expansion module yet, fc is the focal length of the collimation lens, and f2 is the focal length of the MLA2. $\frac{D2}{D1} = \frac{fc}{f2}$, and $\frac{D2}{D1}$ represents the magnification multiple of the beam expansion module. With reference to FIG. 6C, it is not difficult to see that tan $\gamma$ * fc = tan $\lambda$ * f2, and the magnification multiple=$\frac{\tan \lambda}{\tan \gamma} = \frac{fc}{f2} = \frac{D2}{D1}$.

In addition, when $\gamma = \varphi$, a second included angle $\lambda_{max}$ may meet the following formula: tan $\varphi$ * fc = tan $\lambda_{max}$ * f2.

**In a possible implementation,** a distance between the first microlens array in the receiving module and an ideal received light beam may be referred to as a first offset distance.

Optionally, the first offset distance meets the following condition: When an offset angle between a first returned light beam that has passed through the optical splitting module and the ideal received light beam that has passed through the optical splitting module is a third included angle $\theta$, a light spot center of the first returned light beam overlaps with a center of the first microlens array, or an optical axis of the first returned light beam is consistent with an optical axis of the first microlens.

**In a possible implementation,** the first offset distance between the first microlens array and the ideal received light beam is related to the third included angle, the distance between the first microlens array and the optical splitting module, the distance between the optical splitting module and the beam expansion module, and the second offset of the light spot of the first returned light beam on the first focal plane.

Optionally, the second offset is a distance between the light spot of the first returned light beam and a light spot of the ideal received light beam of the first returned light beam on the first focal plane when a first included angle is a maximum offset angle.

For example, the second offset is related to the third included angle and the focal lengths of the two groups of lenses in the beam expansion module.

For example, the second offset $\varDelta y$ meets the following formula:

$$\varDelta y = fc * \left( tan \left( \frac{f2}{fc} * \theta \right) \right)$$

$fc$ is the focal length of the collimation lens, $f2$ is the focal length of the second microlens array, and $\theta$ is the third included angle.

For example, the first offset distance $\varDelta x$ meets the following formula:

$$\varDelta x = |(d1 + d2) * tan\,\theta - \varDelta y|$$

d1 is the distance between the first microlens array and the optical splitting module, d1 is the distance between the optical splitting module and the beam expansion module (or the second microlens array), $\theta$ is the third included angle, and $\varDelta y$ is the second offset.

**In a possible implementation,** the optical receiving module further includes an optical receiving element, and the optical receiving element is configured to receive the first returned light beam that passes through the first microlens array.

When a detection range ranges from 0 to D, a walk off angle (namely, a $\gamma$ angle) respectively ranges from 0 to $\varphi$. Because an offset angle between an optical axis of the MLA3 and the ideal received light beam is $\theta$, when the detection range ranges from 0 to D, an angle offset of the first returned light beam that has passed through the MLA3 relative to the ideal received light beam is within a range of $\left[ -\theta, \frac{fc}{f2} * \varphi - \theta \right]$.

**In a possible implementation,** a distance between the optical receiving element and the ideal received light beam is a second offset distance, and the second offset distance is related to the third included angle, the distance between the first microlens array and the optical splitting module, the distance between the optical splitting module and the beam expansion module, the focal length of the second microlens array, the focal length of the collimation lens, and a third offset of the light spot of the first returned light beam on the first focal plane. The third offset is a distance between the light spot of the first returned light beam on the first focal plane and a light spot of a maximum offset light beam on the focal plane, and the maximum offset light beam is the first returned light beam when the first included angle is the maximum offset angle.

For example, the third offset is related to the maximum offset angle $\varphi$, the focal length of the second microlens array $f2$, the focal length of the collimation lens $fc$, and the third included angle $\theta$.

For example, the third offset ($\varDelta y'$) meets the following formula:

$$\varDelta y' = fc * tan(\varphi - f2/fc * \theta)$$

For example, the second offset distance ($\varDelta x'$) meets the following formula:

$$\varDelta x' = |(d1 + d2) * tan(fc/f2 * \varphi - \theta) - \varDelta y')|$$

For explanations of the parameters, refer to the foregoing descriptions.

**In a possible implementation,** a clear aperture of the first microlens array is related to at least one of the first offset distance and the second offset distance, and the diameter of the first light beam that has not reached the beam expansion unit yet.

For example, the clear aperture w3 of the first microlens array meets the following formula:

$$w3 \geq 2 * max(\Delta x, \Delta x') + D1$$

*max*() represents selecting a maximum value, D1 is the light beam diameter of the first light beam that has not reached the beam expansion module yet or the light beam diameter of the first returned light beam that has passed through the beam expansion module. For other parameters, refer to the foregoing descriptions.

**In a possible implementation,** a period *p* of the first microlens array is related to a transition zone of the first microlens, the first offset distance, the second offset distance, and the light beam diameter of the first light beam that has not reached the beam expansion module yet. The light beam diameter of the first light beam that has not reached the beam expansion module yet may be replaced by the light beam diameter of the first returned light beam that has passed through the beam expansion module.

For example, the period *p* of the first microlens array meets the following formula:

$$p = w3 + \delta$$

$$w3 \geq 2 * max(\Delta x, \Delta x') + D1$$

$\delta$ is the transition zone of the first microlens array. For parameters, refer to the foregoing descriptions.

For ease of understanding, the following describes two parameter combinations of each part of the optical module as an example.

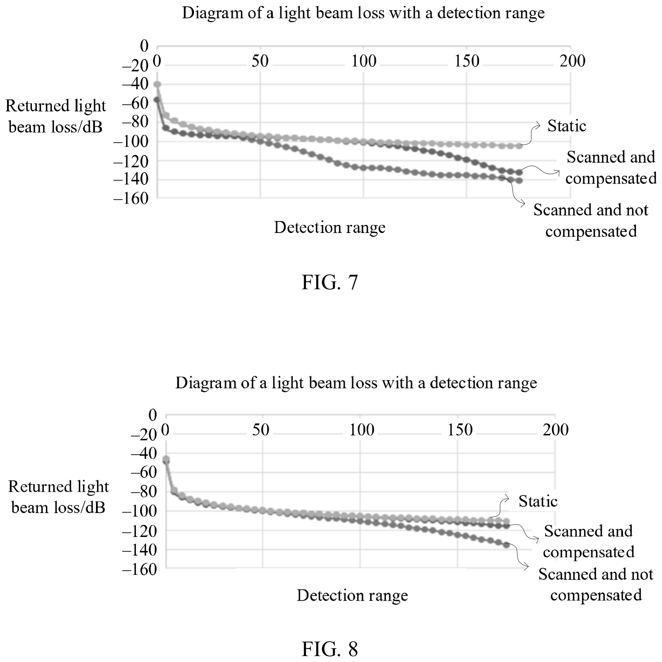

In still another possible example, with reference to an installation sequence of the components in FIG. 6B, the parameters of the components are as follows: Focal lengths of the MLA2 and the MLA3 are respectively f1, f2, and f3, where f1=f2=f3=1.4 mm. The focal length fc of the collimation lens=16 mm, and the transition zone p and the clear aperture w3 of the MLA1 are: p=0.5 mm, and w3=0.48 mm. The diameter D1 of the emitted light beam that passes through the MLA3=0.28 mm, the diameter D2 of the emitted light beam that passes through the beam expansion module=3.2 mm, the maximum offset angle $\varphi$=0.036°, and the third included angle $\theta$=0.228°. The distance d1 between the MLA1 and the PBS and the distance d2 between the PBS and the MLA2 meet the following formula: d1+d2=10 mm. The first offset distance $\Delta x$=0.034 mm, and the second offset distance $\Delta x'$=0.034 mm. Simulation is performed based on the foregoing parameters. FIG. 7 is a diagram of a possible simulation result according to an embodiment of this application. If receiving compensation is not adopted, a loss of the returned light beam is large. In the solution of this application, compensation is performed at a receiving end, so that the loss can be greatly reduced, and signal validity can be improved.

In a possible example, with reference to the installation sequence of the components in FIG. 6B, the parameters of the components are as follows: Focal lengths of the MLA2 and the MLA3 are respectively f1, f2, and f3, where f1=f2=f3=1.4 mm. The focal length fc of the collimation lens=36 mm, and the transition zone p and the clear aperture w3 of the MLA1 are: p=0.5 mm, and w3=0.48 mm. The diameter D1 of the emitted light beam that passes through the MLA3=0.28 mm, the diameter D2 of the emitted light beam that passes through the beam expansion module=3.2 mm, the maximum offset angle $\varphi$=0.036°, and the third included angle $\theta$=0.514°. The distance d1 between the MLA1 and the PBS and the distance d2 between the PBS and the MLA2 meet the following formula: d1+d2=10 mm. The first offset distance $\Delta x$=0.084 mm, and the second offset distance $\Delta x'$=0.084 mm. Simulation is performed based on the foregoing parameters. FIG. 8 is a diagram of a possible simulation result according to an embodiment of this application. If receiving compensation is not adopted, a loss of the returned light beam is large. In the solution of this application, compensation is performed at a receiving end, so that the loss can be greatly reduced, and signal validity can be improved.

**In a possible implementation,** the optical emitting module includes a waveguide or an optical fiber, and/or the optical receiving module includes a waveguide or an optical fiber. For example, the optical receiving element 2042 shown in FIG. 5 may be a waveguide or an optical fiber.

It may be understood that, in an optical module that uses a waveguide or an optical fiber as the receiving end, because a receiving mode field of the waveguide, the optical fiber, or the like is small, and is more sensitive to a walk off angle, the returned light beam is likely to deviate from the receiving mode field. However, in this embodiment of this application, the walk off angle of the returned light beam can be compensated, so that a signal loss caused by the walk off angle can be significantly reduced, validity of a received echo signal can be improved, and detection performance can be improved.

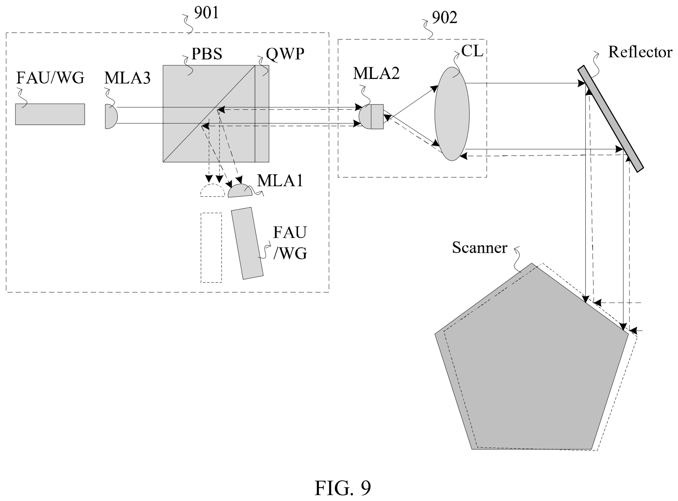

FIG. 9 is a diagram of a structure and an optical path of another optical module according to an embodiment of this application. The optical module may include an optical emitting module, a lens (such as an MLA1, an MLA2, or an MLA3), a PBS, a quarter-wave plate (quarter wave plate, QWP), a collimation lens (Collimation Lens, CL), an optical receiving module, and a scanner. The PBS and the QWP are an example of an optical splitting module, and the MLA2 and the CL are an example of a beam expansion module. The optical emitting module may include one or more of a fiber array (fiber array unit, FAU), a waveguide (waveguide, WG), and the like. The optical receiving module may also include one or more of an FAU, a WG, and the like. Optionally, a part of components in the optical emitting module and the optical receiving module may be integrated together. For example, waveguides may be integrated together, for example, on a silicon photonic chip.

As shown in FIG. 9, the optical module separates an optical receiving path and an optical emitting path through the PBS and the QWP, performs beam expansion on an emitted light beam, and performs beam contraction on a returned light beam through the beam expansion module. An offset exists between a position of the optical receiving module and an ideal received light beam, and an offset distance (or the position of the optical receiving module) and an offset angle are related to a walk off angle, a distance from a center of the PBS to the MLA2, and a distance from the center of the PBS to the MLA1.

Further, an aperture of the MLA2 is related to a size of an emitted light spot and a translation position.

It should be noted that the elements of the optical module shown in this application are examples. In a specific implementation process, the optical module may include more or fewer optical elements than the optical elements shown in implementations of this application. For example, in the following solution, a reflector, a lens, a filter, and the like may be added to the optical module, to assist in implementing optical splitting and beam expansion and to improve optical splitting efficiency, light beam quality, and component integration.

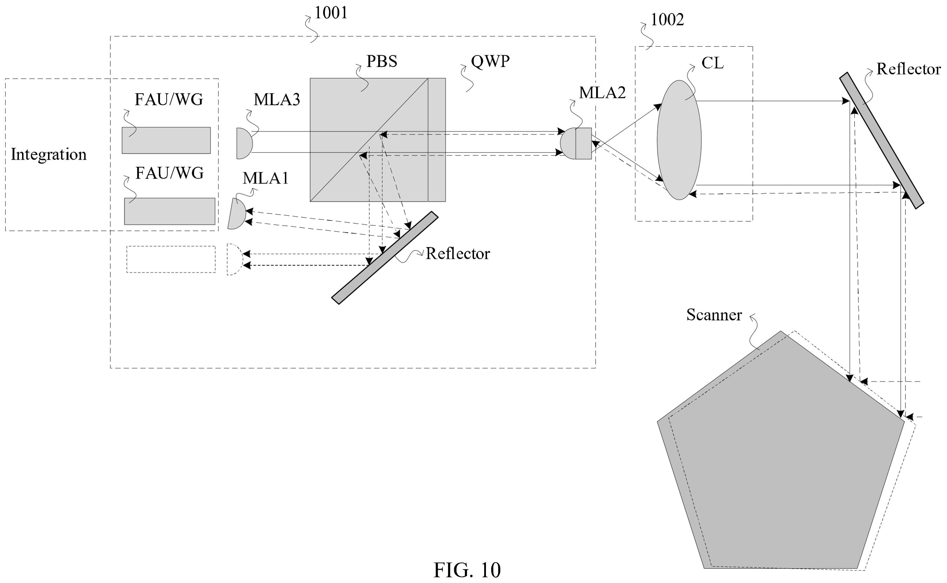

In a possible example, FIG. 10 is a diagram of a structure of another optical module according to an embodiment of this application. A reflector is added between the PBS and the waveguide, so that a position of an optical receiving element is closer to a position of an optical emitting module. This improves component integration. For example, when the emitting module and the optical receiving module propagate light through an optical fiber (or a waveguide), waveguides (or waveguides) may be integrated together, for example, integrated on a same silicon photonic chip, to improve component integration and reduce a size of the optical module.

In some scenarios, a part of optical elements in the optical module may be packaged as an entire module, to further improve stability of the optical elements, improve component integration, and improve output light beam quality.

In a possible implementation, the optical emitting module, the optical receiving module, and the optical splitting module are packaged to form a first optical assembly. Further, an optical window of the first optical assembly is aligned with a clear aperture surface of a beam expansion unit.

For example, as shown in FIG. 9, optical elements in a region 901, namely, the PBS, the QWP, the FAU (or the WG), the MLA1, and the MLA3, may be integrated and packaged to form an optical assembly, and are referred to as the first optical assembly for ease of differentiation. Optical elements in a region 902, namely, the MLA2, the CL, and the like, may be integrated and packaged to form another optical assembly, and are referred to as a third optical assembly for ease of differentiation. The optical window of the first optical assembly is aligned with an optical window of the third optical assembly. Optionally, during packaging, a material whose coefficient of thermal expansion is close to that of the optical element in the optical module may be used as a support component, to implement high-precision alignment between optical elements and improve system stability. The support component includes but is not limited to a base, a substrate, a pad, and the like. For example, a material of a pad supporting an optical element such as an MLA or a PBS may be glass, crystal, or ceramic.

For example, as shown in FIG. 10, optical elements in a region 1001, namely, the PBS, the QWP, the FAU (or the WG), the MLA1, the MLA3, the MLA2, and the like may be integrated and packaged to form an optical assembly, and the optical assembly is referred to as a second optical assembly for ease of differentiation. Optical elements in a region 1002, namely, the CL, and the like, may be integrated and packaged to form another optical assembly, and the optical assembly is referred to as a fourth optical assembly for ease of differentiation. The optical window of the third optical assembly is aligned with an optical window of the fourth optical assembly.

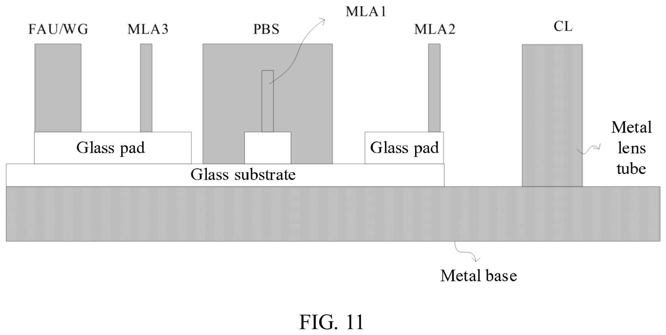

Optionally, during packaging, the first optical element and the third optical element may be packaged on a same metal base. FIG. 11 is a diagram of a structure of another optical module according to an embodiment of this application. An FAU (or a WG), an MLA3, a PBS, an MLA2, and the like may be packaged on a glass substrate. If optical axes of optical elements cannot be aligned, a glass pad may be used to perform supporting or filling. A first optical element and a CL having a metal lens tube may be packaged on a metal base, so that the optical module is integrated as a whole. This improves stability.

Optionally, in a perspective shown in FIG. 11, an MLA1 and the PBS may be arranged in a direction of passing through a paper (or a direction perpendicular to the paper), and a reflected light beam reaches the MLA1 in a direction of passing through the paper that passes through the PBS.

An embodiment of this application further provides a lidar, and the lidar includes the optical module according to any implementation of the first aspect. Further, the lidar further includes a light source, for example, a laser. Optionally, a frequency of a light beam emitted by the light source may change continuously, for example, a frequency-modulated continuous wave (frequency modulated continuous wave, FMCW) laser.

Further, the lidar further includes a detector, and the detector is configured to obtain an electrical signal based on the light beam. For example, the detector may include a photodiode (Photo Diode, PD) that can detect light energy, such as an InGaAs PD, an InP PD, or a germanium PD.

An embodiment of this application further provides a terminal, where the terminal includes the foregoing optical module. Alternatively, the terminal includes the foregoing lidar.

Optionally, the terminal may be an intelligent terminal or a transportation means such as a vehicle, an uncrewed aerial vehicle, or a robot. Certainly, the terminal may alternatively be replaced by an industrial device, an entertainment device, or the like. The intelligent terminal is, for example, a mobile phone, a tablet computer, a notebook computer, a smart band, a smart watch, or smart glasses. The transportation means is, for example, a vehicle, a ship, aircraft, or a logistics robot. The industrial device is, for example, an industrial robot and a robotic arm. The entertainment device is, for example, a virtual reality (virtual reality, VR) device, a mixed reality (mixed reality, MR) device, a massage chair, or a 4D cinema cockpit. A device in which an electrical connector may be used is not strictly limited in this application.

In descriptions of this application, it should be noted that, unless otherwise clearly specified and limited, the terms such as "link", and "connection" should be understood in a broad sense. For example, a connection may be a fixed connection, may be a detachable connection, or may be an abutting connection or an integral connection. A person of ordinary skill in the art may understand specific meanings of the foregoing terms in this application according to specific cases.

In embodiments of this application, the word such as "example" or "for example" is used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise specified, ordinal numbers such as "first" and "second" in embodiments of this application are used to distinguish between a plurality of objects, but are not intended to limit an order, a time sequence, priorities, or degrees of importance of the plurality of objects. For example, a first BMU and a second BMU are merely intended to facilitate description of BMUs in a battery unit, but do not indicate differences in structures, importance degrees, and the like of the first BMU and the second BMU.

**Claims**

1. An optical module, wherein the optical module comprises an optical emitting module, a coaxial optical module, a scanning module, and an optical receiving module;

   the optical emitting module is configured to propagate a first light beam emitted by a light source to the coaxial optical module;
   the coaxial optical module is configured to propagate the first light beam to the scanning module;
   the scanning module is configured to scan the first light beam into object space, and is further configured to transmit a first returned light beam to the coaxial optical module, wherein the first returned light beam is a returned light beam of the first light beam;
   the coaxial optical module is further configured to transmit the first returned light beam to the optical receiving module, wherein a first included angle exists between the first light beam that has entered the coaxial optical module and the first returned light beam that has not returned to the coaxial optical module yet, and the first included angle is greater than 0° and less than 90°; and
   the optical receiving module is configured to receive the first returned light beam, wherein
   a first offset exists between a position of the optical receiving module and an ideal received light beam of the first light beam, and an ideal received light beam of the first returned light beam that has not returned to the coaxial optical module yet is parallel to the first light beam.

2. The optical module according to claim 1, wherein the first offset is related to the first included angle.

3. The optical module according to claim 1, wherein the coaxial optical module comprises an optical splitting module and a beam expansion module, and the optical splitting module is disposed between the optical emitting module and the beam expansion module.

4. The optical module according to claim 3, wherein the optical receiving module comprises a first microlens array, and the first microlens array is configured to receive the first returned light beam that has passed through the optical splitting module;

   a third included angle exists between an optical axis of the first microlens array and the ideal received light beam, and the third included angle is less than or equal to a second included angle and is greater than or equal to a half of the second included angle; and
   the second included angle is related to a maximum offset angle and a beam expansion multiple of the beam expansion module, and the maximum offset angle is related to a maximum detection range of the optical module and a scanning speed of the scanning module.

5. The optical module according to claim 3, wherein the beam expansion module comprises a second microlens array and a collimation lens, the second microlens array and the collimation lens have a common first focal plane, and the second microlens array is disposed between the optical splitting module and the collimation lens.

6. The optical module according to claim 5, wherein a first offset distance between a first microlens array and the ideal received light beam is related to a third included angle, a distance between the first microlens array and the optical splitting module, a distance between the optical splitting module and the beam expansion module, and a second offset of a light spot of the first returned light beam on the first focal plane; and
   the second offset is a distance between the light spot of the first returned light beam and a light spot of the ideal received light beam of the first returned light beam on the first focal plane when the first included angle is a maximum offset angle.

7. The optical module according to claim 6, wherein the optical receiving module further comprises a first optical receiving element, and the optical receiving element is configured to receive the first returned light beam that passes through the first microlens array;

   a distance between the optical receiving element and the ideal received light beam is a second offset distance, and the second offset distance is related to the third included angle, the distance between the first microlens array and the optical splitting module, the distance between the optical splitting module and the beam expansion module, a focal length of the second microlens array, a focal length of the collimation lens, and a third offset of the light spot of the first returned light beam on the first focal plane; and
   the third offset is a distance between the light spot of the first returned light beam on the first focal plane and a light spot of a maximum offset light beam on the focal plane, and the maximum offset light beam is the first returned light beam when the first included angle is the maximum offset angle.

8. The optical module according to claim 7, wherein a clear aperture of the first microlens array is related to at least one of the first offset distance and the second offset distance, and a diameter of the first light beam that has not reached the beam expansion unit yet.

9. The optical module according to any one of claims 3 to 8, wherein the optical emitting module, the optical receiving module, and the optical splitting module are packaged on a glass base to form a first optical assembly, and an optical window of the first optical assembly is aligned with a clear aperture surface of the beam expansion unit.

10. The optical module according to any one of claims 5 to 7, wherein the optical emitting module, the optical receiving module, the optical splitting module, and the second microlens array are packaged on a glass base to form a second optical assembly, and an optical window of the second optical assembly is aligned with a clear aperture surface of the collimation lens.

11. The optical module according to any one of claims 1 to 10, wherein the coaxial optical module comprises a polarization beam splitter PBS and a quarter-wave plate.

12. The optical module according to any one of claims 1 to 11, wherein the optical emitting module is a waveguide or an optical fiber; and
    the optical receiving module comprises a waveguide or an optical fiber.

13. A lidar, wherein the lidar comprises the optical module according to any one of claims 1 to 12.

**14.** A terminal, wherein the terminal comprises the optical module according to any one of claims 1 to 12 or the lidar according to claim 13.

**15.** The terminal according to claim 14, wherein the terminal is a vehicle, an uncrewed aerial vehicle, or a robot.

Optical
system

Emitting end and
receiving end

Target
object

Scanning
mechanism

Offset angle
(walk off angle)

FIG. 1

20

First light
beam

Ideal received
light beam

Optical emitting
module 201

Coaxial
optical
module
202

γ

Scanning
module
203

First returned
light beam

204

FIG. 2

FIG. 3

FIG. 4

20

202

| Optical emitting module 201 | Optical splitting module 2021 | Beam expansion module 2022 | Scanning module 203 |

λ

γ

Principal optical axis

θ

204

2041

2042

FIG. 5

20

Optical emitting module

MLA3

PBS

QWP

MLA2

Collimation lens

Scanning module

MLA1

Receiving element

FIG. 6A

FIG. 6B

FIG. 6C

Diagram of a light beam loss with a detection range

Returned light beam loss/dB

Detection range

Static

Scanned and compensated

Scanned and not compensated

FIG. 7

Diagram of a light beam loss with a detection range

Returned light beam loss/dB

Detection range

Static

Scanned and compensated

Scanned and not compensated

FIG. 8

FIG. 9

FIG. 10

FIG. 11

## INTERNATIONAL SEARCH REPORT

| International application No. |
| --- |
| **PCT/CN2023/105547** |

| A. | CLASSIFICATION OF SUBJECT MATTER |
| --- | --- |

G01S 7/481(2006.01)i

According to International Patent Classification (IPC) or to both national classification and IPC

| B. | FIELDS SEARCHED |
| --- | --- |

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNTXT, ENTXTC, WPABSC, VEN: 华为技术有限公司, 激光, 雷达, 发射, 接收, 同轴, 共轴, 分光, PBS, 扫描, 返回, 回波, 偏移, 偏离, 补偿, 去扫描, 解扫描, 走离, 滞后角, lidar, laser, radar, transmit+, receiv+, coaxial, split+, scan+, return, echo, offest, compensat+, walk w off

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114779212 A (HESAI TECHNOLOGY CO., LTD.) 22 July 2022 (2022-07-22) description, paragraphs [0002] and [0054]-[0080], and figures 6-7 | 1-3, 9, 11-15 |
| A | CN 116338632 A (SUTENG INNOVATION TECHNOLOGY CO., LTD.) 27 June 2023 (2023-06-27) entire document | 1-15 |
| A | CN 116338634 A (SUTENG INNOVATION TECHNOLOGY CO., LTD.) 27 June 2023 (2023-06-27) entire document | 1-15 |
| A | CN 113366335 A (AEVA, INC.) 07 September 2021 (2021-09-07) entire document | 1-15 |
| A | US 11536813 B1 (AEVA, INC.) 27 December 2022 (2022-12-27) entire document | 1-15 |
| A | US 4311385 A (RAYTHEON COMPANY) 19 January 1982 (1982-01-19) entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 November 2023** | **22 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/105547**

| Patent document cited in search report | | | Publication date (day/month/year) | Patent family member(s) | | | Publication date (day/month/year) |
|---|---|---|---|---|---|---|---|
| CN | 114779212 | A | 22 July 2022 | None | | | |
| CN | 116338632 | A | 27 June 2023 | None | | | |
| CN | 116338634 | A | 27 June 2023 | EP | 4202480 | A1 | 28 June 2023 |
| | | | | US | 2023204768 | A1 | 29 June 2023 |
| CN | 113366335 | A | 07 September 2021 | EP | 3867663 | A1 | 25 August 2021 |
| | | | | JP | 2022505179 | A | 14 January 2022 |
| | | | | US | 2020124711 | A1 | 23 April 2020 |
| | | | | US | 11709240 | B2 | 25 July 2023 |
| | | | | WO | 2020081188 | A1 | 23 April 2020 |
| | | | | KR | 20210092212 | A | 23 July 2021 |
| US | 11536813 | B1 | 27 December 2022 | None | | | |
| US | 4311385 | A | 19 January 1982 | None | | | |

Form PCT/ISA/210 (patent family annex) (July 2022)